# EUROPÄISCHE PATENTANMELDUNG

(11) **EP 2 418 250 A1**
(43) Veröffentlichungstag der Anmeldung: **15.02.2012**
(21) Anmeldenummer: 10172530.7
(22) Anmeldetag: 11.08.2010
(51) Int. Cl.: C08L 67/04, C08K 5/29

(54) **Langlebige biobasierte Kunststoffe auf Basis von Polyhydroxyalkanoat, ein Verfahren zu deren Herstellung und deren Verwendung**

(71) Anmelder: Rhein Chemie Rheinau GmbH, 68219 Mannheim (DE)
(72) Erfinder: Fruth, Andrea, Dr., 65185 Wiesbaden (DE); Eckert, Armin, 68794 Oberhausen-Rheinhausen (DE); Cano Sierra, Ana Maria, Dr., 69117 Heidelberg (DE); Krug, Andreas, 68309 Mannheim (DE); Wiloth, Bernd, 68775 Ketsch (DE)
(74) Vertreter: Siegers, Britta

(57) **Zusammenfassung**

Gegenstand der vorliegenden Erfindung sind neuartige langlebige und hydrolysestabile biobasierte Kunststoffe auf Basis von Polyhydroxyalkanoat (PHA), ein Verfahren zu deren Herstellung und deren Verwendung.

## Beschreibung

Gegenstand der vorliegenden Erfindung sind neuartige langlebige und hydrolysestabile biobasierte Kunststoffe auf Basis von Polyhydroxyalkanoat (PHA), ein Verfahren zu deren Herstellung und deren Verwendung.

Biobasierte Kunststoffe, sogenannte Biopolymere, sind im Vergleich zu petrochemisch basierten Kunststoffen aufgrund der eingesetzten biobasierten Rohstoffe ökologisch nachhaltigere Werkstoffe. Insbesondere im Hinblick auf den Umweltschutz und die drohende Klimaerwärmung haben biobasierte Kunststoffe eine zunehmend Bedeutung nicht nur im Bereich Verpackung, sondern auch bei der Herstellung langlebiger sowie technischer Kunststoffprodukte erlangt. Um jedoch biobasierte Werkstoffe auf der Basis von Polyhydroxyalkanoaten im Vergleich zu herkömmlichen und etablierten Werkstoffen konkurrenzfähig zu machen, sind vielfach noch Optimierungen in der Werkstoffherstellung und -verarbeitung notwendig.

Biobasierte Kunststoffe bestehen beispielsweise aus einem aliphatischem Polyesterharz, welches durch direkte fermentative Herstellung aus Stärke, Zucker, Kohlenhydraten, Pflanzenöl oder Fetten hergestellt wird.

Biobasierten Kunststoffe haben den großen Vorteil, dass sie sehr umweltfreundlich sind. Im Bereich der technischen Anwendungen haben aus der Gruppe der Biopolymere besonders Polyhydroxyalkanoate den Vorteil, dass sie beispielsweise eine höhere Wärmeformbeständigkeit, im Vergleich zu Polymilchsäure (PLA), besitzen. Dies erlaubt die Herstellung von langlebigen Gegenständen, welche aus Polymilchsäure aufgrund des niedrigen Erweichungspunktes nicht anwendbar sind, wie z.B. Wasserkocher, Fön. Weiterhin zeigen Polyhydroxyalkanoate eine sehr geringe Schrumpfung bei gefertigten Produkten, so dass auch Produktgeometrien möglich sind, die mit herkömmlichen Polymeren nicht realisiert werden können. Im Vergleich zu Polymilchsäure ist die Produktklasse der Polyhydroxyalkanoate weitaus weniger hydrolyseempfindlich. Dennoch haben Polyhydroxyalkanoate den Nachteil, dass sie für langlebige und technische Anwendungen keine ausreichende Hydrolysestabilität besitzen und zudem schlecht verarbeitbar sind.

Es wurde versucht, über den Zusatz verschiedenster Additive dieses Problem zu lösen. So wird beispielsweise im Abstract von JP-A 2008 303 286 der Einsatz von 0,5 Gew.-% eines polymeren Carbodiimides in Polyhydroxyalkanoaten beschrieben. Allerdings wird in Bezug auf die Hydrolysestabilität hier kein befriedigendes Ergebnis erreicht. Gleiches gilt für den Abstract von WO 2009119512, in welchem der Einsatz eines Polycarbodümiden von Gemischen aus Polybtuylen- succinat sowie Blends aus Polybutylensuccinat mit u.a. in Polyhydroxyalkanoaten genannt wird. Allerdings wird auch hier keine ausreichende Hydrolysebeständigkeit erhalten.

In EP-A 1 627 894 wird die Verwendung von Düsopropylphenylcarbodümid als Hydrolyseschutzmittel in aliphatischen Polyesterharzen beschrieben. Jedoch wird hinsichtlich der Verarbeitbarkeit kein zufriedenstellendes Ergebnis erreicht.

Die in EP-A 1 354 917 zusätzlich eingesetzten Antioxidantien reduzieren zwar die Gelbfärbung, erhöhen, aber nicht die Stabilität.

Es bestand daher die Aufgabe, neuartige langlebige biobasierte Kunststoffe auf der Basis von Polyhydroxyalkanoaten bereitzustellen, welche die Nachteile des Standes der Technik nicht aufweisen und über eine hohe Hydrolysestabilität und eine gute Verarbeitbarkeit verfügen.

Überraschenderweise wurde nun gefunden, dass die erfindungsgemäßen biobasierten Kunststoffe aus der Klasse der Polyhydroxyalkanoate, enthaltend eine Kombination aus mindestens einem monomeren und mindestens einem oligomeren und/oder polymeren Carbodiimid, diese Aufgabe erfüllen.

Gegenstand der vorliegenden Erfindung sind daher biobasierte Kunststoffe, enthaltend eine Kombination aus mindestens einem Polyhydroxyalkanoat und mindestens einem monomeren, vorzugsweise aromatischen monomeren und einem oligomeren und/oder polymeren Carbodiimid.

Bei den biobasierten Kunststoffen im Sinne der Erfindung handelt es sich vorzugsweise um Polyhydroxyalkanoate, welche durch direkte fermentative Herstellung aus Stärke, Zucker, Kohlenhydraten, Pflanzenöl oder Fetten hergestellt werden können. Zusätzlich einsetzbar sind aliphatisch-aromatische Polyesterharze, wie z.B. Polytrimethylenterephthalat (PTT), Polybutylenterephthalat (PBT), Polybutylenadipatterephthalat (PBAT), Polybuytlensuccinat-terephthalat (PBST). Dabei mit umfasst sind auch Blends mit biobasierten Kunststoffen, wie z.B. mit Polymilchsäure (PLA), Polycarbonat, Stärke, Polybutylenterephthalat (PBT), Polyamid, Polybutylenadipatterephthalat (PBAT).

Bei Polyhydroxyalkanoaten handelt es sich um Verbindungen der Strukturformel (I) 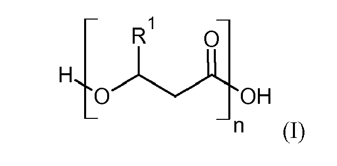 mit R¹ = C₁- bis C₁₄-Alkyl. Besonders bevorzugt sind Polyhydroxybutyrat (PHB), Polyhydroxyvalerat (PHV), Polyhydroxybutyratvalerat (PHBV), Polyhydroxyhexonat (PHH), Polyhydroxyoctanoat (PHO), Polyhydroxybutyrathexanoat (PHBH) und Mischungen daraus.

Die als biobasierte Kunststoffe besonders bevorzugten Polyhydroxyalkanoate sind kommerziell verfügbar, z.B. unter dem Namen Mirel bei der Firma Telles bzw. als Enmat der Firma Tianan, oder können nach den, dem Fachmann geläufigen Verfahren, z.B. durch Fermentation, hergestellt werden.

Als monomere, oligomere und/oder polymere Carbodiimide sind alle bekannten Carbodiimide einsetzbar.

Vorzugsweise handelt es sich bei dem polymeren und/ oder oligomeren Carbodiimid um eine Verbindung der allgemeinen Formel (11),

R²-(-N=C=N-R'-)ₘ-R³ , (11)

in der
R' einen aromatischen und/oder aliphatischen und/oder cycloaliphatischen und/oder araliphatischen Rest bedeutet, R' innerhalb des Moleküls gleich oder verschieden ist und bei verschiedenen Kombinationen jeder der vorgenannten Reste beliebig miteinander kombiniert werden kann, R' bei aromatischen oligomeren oder polymeren Carbodiimiden keinen oder in mindestens einer ortho-Stellung zum aromatischen Kohlenstoffatom, das die Carbodiimidgruppe trägt, aliphatische und/oder cycloaliphatische und/oder aromatische Substituenten mit mindestens einem Kohlenstoffatom tragen kann, die auch Heteroatome tragen können,
R² = C₁ - Cis-Alkyl, C₅ - C,₈-Cycloalkyl, Aryl, C₇ - C₁₈-Aralkyl, -R'-NH-COS-R⁴ -R'COOR⁴ -R'-OR⁴, -R'-N(R⁴)₂, -R'-SR⁴, , -R'-OH, , R'-NH₂, , -R'-NHR⁴, -R'-Epoxy, , R'-NCO, -R'-NHCONHR⁴, -R'-NHCONR⁴R⁵ oder -R'-NHCOOR⁶ und
R³ = -N=C=N-Aryl, -N=C=N-Alkyl, -N=C=N-Cycloalkyl, -N=C=N-Aralkyl, -NCO, -NHCONHR⁴, -NHCONHR⁴R⁵, -NHCOOR⁶, -NHCOS-R⁴, **-**COOR⁴, -OR⁴, - Epoxy, -N(R⁴)2, -SR⁴, -OH, -NH₂, -NHR⁴,
wobei in R² und R³ unabhängig voneinander R⁴ und R⁵ gleich oder verschieden sind und einem C₁ -C₂₀-Alkyl-, C₃ - C₂₀-Cycloalkyl, C₇ - C₁₈-Aralkylrest, Oligo-/Polyethylenglykole und/oder Oligo-/Polypropylenglykole darstellen und R⁶ eine der Bedeutungen von R⁴ hat oder einen Polyester- oder einen Polyamidrest bedeutet, und
bei oligomeren Carbodiimiden m einer ganzen Zahl von 1 bis 5 entspricht, und
bei polymeren Carbodiimiden m einer ganzen Zahl von > 5 entspricht.

Bei den oligomeren und/oder polymeren Carbodiimiden sind für R' besonders bevorzugt 1,3-substituiertes-2,4,6-Triisopropylphenyl, 4,4'-substituierte-Dicyclohexylmethanderivate, Isophoronderivate, 1,3-Bis-(1-methyl-1-isocyanato-ethyl)-benzol, Tetramethylxylylenderivate, 2,4-substituierten Tolylen, 2,6-substituierten Tolylen und/oder Gemischen aus 2,4- oder 2,6-substituierten Tolylen.

In einer weiteren bevorzugten Ausführungsform der Erfindung enthält der biobasierte Kunststoff zusätzlich ein monomeres Carbodiimid, besonders bevorzugt ein aromatisches, ganz besonders bevorzugt ein aromatisches, sterisch gehindertes Carbodiimid.

In einer weiteren bevorzugten Ausführungsform der Erfindung handelt es sich bei dem monomeren Carbodiimid um eine Verbindung der Formel (III)

R"-N=C=N-R'" , (III)

in der
und R" und R"' gleich oder verschieden sind und C₃-C₁₈-Alkyl, C₅-C₁₈-Cycloalkyl, Aryl, C₇-C₁₈-Aralkyl entsprechen, R" und R'" im Fall eines aromatischen Restes keine oder in mindestens einer ortho-Stellung zum aromatischen Kohlenstoffatom, das die Carbodiimidgruppe trägt, aliphatische und/oder cycloaliphatische und/oder aromatische Substituenten mit mindestens einem Kohlenstoffatom tragen, die auch Heteroatome tragen können.

Als aromatisches monomeres Carbodiimid sind sterisch gehinderte, aromatische Carbodiimide der allgemeinen Formel (IV), 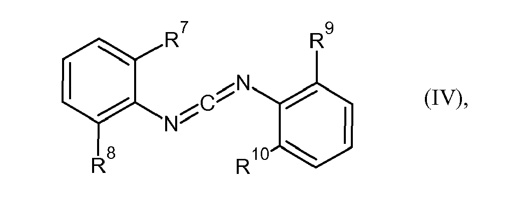 in der R⁷ bis R¹⁰ unabhängig voneinander H, C₁- bis C₂₀-Alkyl, C₃- bis C₂₀-Cycloalkyl, C₆- bis C₁₅-Aryl oder einen C₆- bis C₁₅-Aralkylrest bedeutet, der gegebenenfalls auch Heteroatome enthalten kann, besonders bevorzugt.

In einer bevorzugten Ausführungsform der vorliegenden Erfindung ist es möglich, eine Kombination aus einem aromatischen monomeren und oligomeren und/oder polymeren Carbodiimide einzusetzen.

Bei den vorgenannten monomeren und auch den oligomere/polymeren Carbodiimide handelt es sich bei den Verbindungen der Formeln (II) bis (IV) um käuflich erhältliche Verbindungen, die z.B. bei der Rhein Chemie Rheinau GmbH oder bei der Firma Nisshinbo erhältlich sind.

Ebenso möglich ist auch die Herstellung der Carbodiimide nach den beispielsweise in US 2,941,956 beschriebenen Verfahren oder durch die Kondensation von Diisocyanaten unter Abspaltung von Kohlendioxid bei erhöhten Temperaturen, z.B. bei 40 °C bis 200 °C, in Gegenwart von Katalysatoren. Geeignete Verfahren werden in DE-A-11 30 594 und in FR 1 180 370 beschrieben. Als Katalysatoren haben sich z.B. starke Basen oder Phosphorverbindungen bewährt. Vorzugsweise werden Phospholenoxide, Phospholidine oder Phospholinoxide sowie die entsprechenden Sulfide verwendet. Ferner können als Katalysatoren tertiäre Amine, basisch reagierende Metallverbindungen, Carbonsäuremetallsalze und nicht basische Organometallverbindungen verwendet werden.

Zur Herstellung der eingesetzten Carbodiimide und/oder Polycarbodiimide eignen sich alle Isocyanate, wobei im Rahmen der vorliegenden Erfindung bevorzugt Carbodiimide und/oder Polycarbodiimide verwendet werden, die auf durch C₁- bis C₄-Alkyl substituierten aromatischen Isocyanaten aufbauen, wie z.B. 2,6-Diisopropylphenylisocyanat, 2,4,6-Trüsopropylphenyl-1,3-diisocyanat, 2,4,6-Triethylphenyl-1,3-düsocyanat, 2,4,6-Trimethyl-phenyl-1,3-düsocyanat, 2,4'-DÜsocyanatodiphenylmethan, 3,3',5,5'-Tetraisopropyl-4,4'-düsocyanatodiphenylmethan, 3,3',5,5'-Tetraethyl-4,4'-diisocyanatodiphenylmethan, Tetramethylxyloldiisocyanat, 1,5-Naphthalin-diisocyanat, 4,4'-Diphenylmethandiisocyanat, 4,4'-Diphenyldimethyl-methandüsocyanat, 1,3-Phenylendüsocyanat, 1,4-Phenylendiisocyanat, 2,4-Tolylendüsocyanat, 2,6-Tolylendiisocyanat, ein Gemisch aus 2,4-Tolylendüsocyanat und 2,6-Tolylendüsocyanat, Hexamethylendiisocyanat, Cyclohexan-1,4-diisocyanat, Xylylendiisocyanat, Isophorondiisocyanat, Dicyclohexylmethan-4,4'-di-isocyanat, Methylcyclohexandiisocyanat, Tetramethylxylylendiisocyanat, 2,6-DÜsopropylphenylen-isocyanat und 1,3,5-Trüsopropylbenzol-2,4-düsocyanat oder deren Gemische, oder auf substituierten Aralkylen, wie 1,3-Bis-(1-methyl-1-isocyanato-ethyl)-benzol, basieren. Besonders bevorzugt ist es, wenn die Carbodiimide und/oder Polycarbodiimide auf 2,4,6-Trüsopropylphenyl-1,3-düsocyanat, 2,6-DÜsopropylphenylenisocyanat, Dicyclohexylmethan-4,4'-diisocyanat, Isophorondiisocyanat, 1,3-Bis-(1-methyl-1-isocyanato-ethyl)-benzol, Tetramethyl-xylylendiisocyanat, 2,4-Tolylendiisocyant, 2,6-Tolylendüsocyanat und/ oder Gemischen aus 2,4- und 2,6-Tolylendüsocyanat basieren.

Vorzugsweise beträgt der Anteil an Carbodiimid in dem Polyhydroxyalkanoat 0,1 - 5%.

In einer weiteren bevorzugten Ausführungsform der vorliegenden Erfindung beträgt die Gesamtmenge an Carbodiimide, bezogen auf den Kunststoff, mindestens 0,5%, besonders bevorzugt ≥0,9 Gew%.

Weiterhin ist in einer bevorzugten Ausführungsform das Verhältnis von monomerem zu oligomerem und/oder polymerem Carbodiimid 10:1 bis 1:10, besonders bevorzugt ist ein Verhältnis von 3:1 bis 1:3.

Des Weiteren ist bevorzugt, dass der Anteil an Polyhydroxyalkanoat in dem biobasierten Kunststoff 5-99,5%, besonders bevorzugt 20-99% beträgt.

Gegenstand der vorliegenden Erfindung ist zudem ein Verfahren zur Herstellung der erfindungsgemäßen biobasierten Kunststoffe, wonach mindestens ein Polyhydroxyalkanoat mit mindestens einem monomeren und mindestens einem oligomeren und/oder polymeren Carbodiimid in einem Mischaggregat vermischt werden. Dabei können die Carbodiimide auch vorgemischt und dann als Gemisch zugegeben werden.

Die Reihenfolge, in der die Carbodiimide eingemischt werden, kann dabei frei gewählt werden. Des Weiteren kann die Zugabe der Carbodiimide auch nach der Herstellung des biobasierten Kunststoffes erfolgen.

Mischaggregate im Sinne der Erfindung sind beispielsweise ein Extruder oder Kneter.

Gegenstand der vorliegenden Erfindung ist zudem die Verwendung der erfindungsgemäßen biobasierten Kunststoffe in langlebigen Anwendungen, wie z.B. Elektronik, Automotive, Construction, Transportwesen, im Haushalt, z.B. als Badutensilien, oder als Bürobedarf, oder für Anwendungen unter "severe conditions", wie z.B. die sterilen Bedingungen in der Medizin.

## Patentansprüche

1. Biobasierte Kunststoffe enthaltend eine Kombination aus mindestens einem Polyhydroxyalkanoat und mindestens einem monomeren Carbodiimid und mindestens einem oligomeren und/oder polymeren Carbodiimid.

2. Biobasierte Kunststoffe nach Anspruch 1, **dadurch gekennzeichnet, dass** es sich bei dem polymeren und/ oder oligomeren Carbodiimid um eine Verbindung der allgemeinen Formel (II),
R²-(-N=C=N-R'-)ₘ-R³ handelt, (II)
in der
R' einen aromatischen und/oder aliphatischen und/oder cycloaliphatischen und/oder araliphatischen Rest bedeutet, R' innerhalb des Moleküls gleich oder verschieden ist und bei verschiedenen Kombinationen jeder der vorgenannten Reste beliebig miteinander kombiniert werden kann, R' bei aromatischen oligomeren oder polymeren Carbodiimiden keinen oder in mindestens einer ortho-Stellung zum aromatischen Kohlenstoffatom, das die Carbodiimidgruppe trägt, aliphatische und/oder cycloaliphatische und/oder aromatische Substituenten mit mindestens einem Kohlenstoffatom tragen kann, die auch Heteroatome tragen können,
R² = C₁ - Cis-Alkyl, C₅ - C₁₈-Cycloalkyl, Aryl, C₇ - C₁₈-Aralkyl, -R'-NH-COS-R⁴, -R'COOR⁴, -R'-OR⁴, -R'-N(R⁴)z, -R'-SR⁴, -R'-OH, R'-NH₂, -R'-NHR⁴, -R'-Epoxy, R'-NCO, -R'-NHCONHR⁴, -R'-NHCONR⁴R⁵ oder -R'-NHCOOR⁶ und
R³ = -N=C=N-Aryl, -N=C=N-Alkyl, -N=C=N-Cycloalkyl, -N=C=N-Aralkyl, -NCO, -NHCONHR⁴, - NHCONHR⁴R⁵, -NHCOOR⁶, -NHCOS-R⁴, -COOR⁴, -OR⁴, - Epoxy, -N(R⁴)₂, -SR⁴, -OH, -NH₂, -NHR⁴,
wobei in R² und R³ unabhängig voneinander R⁴ und R^{S} gleich oder verschieden sind und einem C₁ - C₂₀-Alkyl-, C₃ - C₂₀-Cycloalkyl, C₇ - C₁₈-Arallcylrest, Oligo-/Polyethylenglykole und/oder Oligo-/Polypropylenglykole darstellen und R⁶ eine der Bedeutungen von R⁴ hat oder einen Polyester- oder einen Polyamidrest bedeutet, und
bei oligomeren Carbodiimiden m einer ganzen Zahl von 1 bis 5 entspricht, und
bei polymeren Carbodiimiden m einer ganzen Zahl von > 5 entspricht.

3. Biobasierte Kunststoffe nach Anspruch 1 oder 2, **dadurch gekennzeichnet, dass** es sich bei dem polymeren und/oder oligomeren Carbodiimid um Verbindungen der Formel (I) handelt, bei denen R' gleich 1,3-substituierten-2,4,6-Triisopropylphenyl und/oder 4,4'-substituiertem Dicyclohexylmethan-4,4'-derivaten und/oder Isophoronderivaten und/oder 1,3-Bis-(1-methyl-1-isocyanato-ethyl)-benzol und/oder Tetramethylxylylenderivaten und/oder 2,4-substituierten Tolylen und/oder 2,6-substituierten Tolylen und/oder Gemischen aus 2,4- oder 2,6-substituierten Tolylen entspricht.

4. Biobasierte Kunststoffe nach einem oder mehreren der Ansprüche 1 bis 3, **dadurch gekennzeichnet, dass** das monomere Carbodiimid sterisch gehindert ist.

5. Biobasierte Kunststoffe nach Anspruch 4, **dadurch gekennzeichnet, dass** das monomere Carbodiimid aromatisch ist.

6. Biobasierte Kunststoffe nach einem oder mehreren der Ansprüche 4 bis 5, **dadurch gekennzeichnet, dass** es sich bei dem monomeren Carbodiimid um eine Verbindung der Formel (III)
R"-N=C=N-R"' (III)
handelt, in der
R" und R"' gleich oder verschieden sind und C₃-C₁₈-Alkyl, C₅ - C₁₈-Cycloallcyl, Aryl, C₇-- C₁₈-Aralkyl entsprechen,
R" und R"' im Fall eines aromatischen Restes keine oder in mindestens einer ortho-Stellung zum aromatischen Kohlenstoffatom, das die Carbodümidgruppe trägt, aliphatische und/oder cycloaliphatische und/oder aromatische Substituenten mit mindestens einem Kohlenstoffatom tragen, die auch Heteroatome tragen können.

7. Biobasierte Kunststoffe nach einem oder mehreren der Ansprüche 5 bis 6, **dadurch gekennzeichnet, dass** es sich bei dem aromatischen monomeren Carbodiimid um ein sterisch gehindertes, aromatisches Carbodiimid der allgemeinen Formel (IV) , 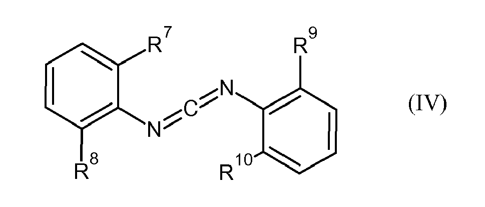 handelt, in der R⁷ bis R¹⁰ unabhängig voneinander H, C₁- bis C₂₀-Alkyl, C₃- bis C₂₀-Cycloalkyl, C₆- bis C₁₅-Aryl oder einen C₆- bis C₁₅-Aralkylrest bedeutet, der gegebenenfalls auch Heteroatome enthalten kann.

8. Biobasierte Kunststoffe nach einem oder mehreren der Ansprüche 1 bis 6, **dadurch gekennzeichnet, dass** es sich bei dem Polyhydroxyalkanoat um eine Verbindung der Formel (I) 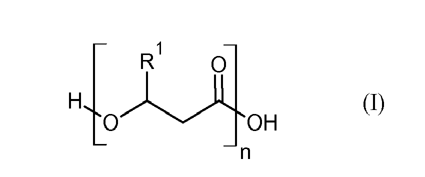 handelt, in der
R¹ einem C₁- bis C₁₄-Allcylrest entspricht.

9. Verfahren zur Herstellung der biobasierten Kunststoffe nach einem oder mehreren der Ansprüche 1 bis 8, **dadurch gekennzeichnet, dass** mindestens ein Polyhydroxyalkanoat mit mindestens einem monomeren und mindestens einem oligomeren und/oder polymeren Carbodiimid in einem Mischaggregat vermischt werden.

10. Verwendung der biobasierten Kunststoffe nach einem oder mehreren der Ansprüche 1 bis 8 in langlebigen Anwendungen in der Elektronik, Automotive, Construction, Transportwesen, im Haushalt, als Bürobedarf oder in Anwendungen unter "severe conditions".
